# FASCICULE DE BREVET EUROPEEN

(11) **EP 3 554 896 B1**
(45) Date de publication et mention de la délivrance du brevet: **09.09.2020**
(21) Numéro de dépôt: 17811618.2
(22) Date de dépôt: 14.12.2017
(51) Int. Cl.: B60R 13/02, B60J 5/04

(54) **AGENCEMENT DANS UN VÉHICULE AUTOMOBILE COMPRENANT UN ÉLÉMENT DE STRUCTURE DE PORTE, UN ÉLÉMENT D'HABILLAGE ET DES MOYENS DE LIMITATION DE LA DÉFORMATION DE L'ÉLÉMENT D'HABILLAGE**
ANORDNUNG IN EINEM KRAFTFAHRZEUG MIT EINEM STRUKTURELLEN TÜRELEMENT, EINEM ABDECKELEMENT UND MITTELN ZUR BEGRENZUNG DER VERFORMUNG DES ABDECKELEMENTS
ARRANGEMENT IN A MOTOR VEHICLE COMPRISING A DOOR STRUCTURAL ELEMENT, A COVERING ELEMENT AND MEANS FOR LIMITING THE DEFORMATION OF THE COVERING ELEMENT

(30) Priorité: 19.12.2016 FR 1662759
(43) Date de publication de la demande: 23.10.2019
(73) Titulaire: Renault S.A.S., 92100 Boulogne-Billancourt (FR)
(72) Inventeur: COUTURIER, Karl, 78650 Beynes (FR); MOSSU, Stephane, 78460 Chevreuse (FR)
(86) Numéro de dépôt international: PCT/EP2017/082854
(87) Numéro de publication internationale: WO 2018/114605

(56) Documents cités:
- DE-A1-102010 035 198
- US-A- 6 123 385

## Description

L'invention concerne un agencement dans un véhicule automobile comprenant un élément d'habillage monté sur un élément de structure d'entrée de porte, composé d'un renfort interne et d'un élément de tôlerie externe présentant une paroi d'orientation longitudinale, l'élément d'habillage s'étendant selon un plan longitudinal parallèle à celui de la paroi de l'élément de tôlerie externe et un rebord s'étendant selon un plan transversal en direction de l'élément de structure depuis un bord d'extrémité de l'élément d'habillage, un bord du rebord étant muni d'une partie terminale formant un renfoncement présentant un profil en forme de U, constitué par deux cloisons interne et externe parallèles au plan de l'élément d'habillage reliées entre elles par une cloison de fond transversale, la cloison externe étant en appui contre une extrémité de la paroi, de façon qu'elles forment ensemble une feuillure, le renfort présentant une première paroi s'étendant selon un plan longitudinal en appui contre une partie de la paroi.

Dans un véhicule automobile, les entrées de porte sont généralement formées par un élément de structure composé d'un élément de tôlerie interne et d'un renfort externe. Un élément d'habillage intérieur, disposé au moins en partie à distance de l'élément de structure, permet de le dissimuler à la vue des passagers.

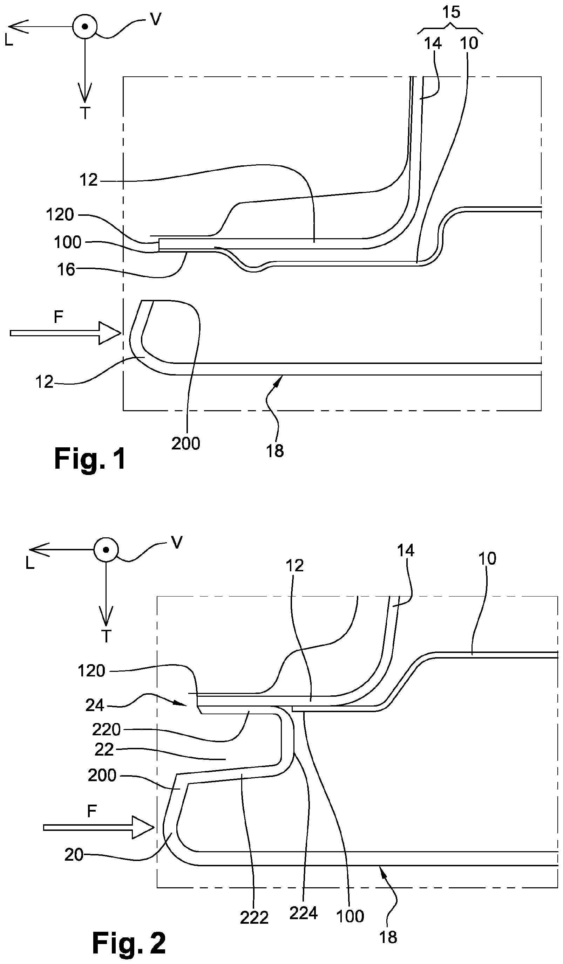

Tel que représenté à la figure 1, un renfort interne 10 et un élément de tôlerie externe 14 forment un élément de structure 15. Le renfort interne 10 et une paroi 12 de l'élément de tôlerie externe 14 s'étendent parallèlement selon un plan longitudinal, leurs extrémités libres 100 et 120 étant solidaires l'une de l'autre de façon à former une feuillure 16. L'élément d'habillage 18 s'étend selon un plan sensiblement parallèle à celui de l'élément de tôlerie 10. Il comporte à son extrémité libre un rebord 20 s'étendant selon un plan transversal en direction du renfort 10. Le bord d'extrémité 200 libre du rebord 20 est situé à distance du renfort 10.

Cependant, lors de l'utilisation du véhicule, il peut arriver que les passagers, en se tenant à l'encadrement de la porte, appuient sur l'élément d'habillage selon une direction longitudinale indiquée par la flèche F. Sous cette pression, l'élément d'habillage 18, qui n'est pas situé contre l'élément de structure, risque de se déplacer et de se déformer, ce qui nuit à l'impression de qualité perçue.

Il est connu dans l'état de la technique un agencement représenté à la figure 2 dans lequel à la différence de l'agencement de la figure 1, l'extrémité 100 de l'élément de tôlerie est en contact avec seulement une partie de la paroi 12 de l'élément de tôlerie 14, l'extrémité 120 de la paroi 12 étant située à distance de l'extrémité 100 du renfort 10. L'élément d'habillage 18 de la figure 2 est différent de celui de la figure 1 en ce que le bord d'extrémité 200 du rebord 20 est muni d'une partie terminale en renfoncement présentant un profil en forme de U 22. Le profil en U est constitué par deux cloisons externes et internes 220 et 222 sensiblement parallèles à la paroi 12 reliées par une cloison de fond 224 perpendiculaire à la paroi 12. La cloison externe 220 est en contact avec l'extrémité 120 de la paroi 12 de l'élément de tôlerie, de sorte que la cloison externe 220 du U et l'extrémité 100 du renfort 10 sont dans le prolongement l'une de l'autre.

La cloison externe 220 et l'extrémité 120 forment une feuillure 24.

Dans le cas où une force F est exercée sur l'élément d'habillage 18 au niveau de son rebord 20, le déplacement de l'élément d'habillage va être limité par la présence de l'extrémité 100 du renfort 10. Cependant, à mesure des sollicitations ou sous l'effet d'un effort important, la contre-réaction offerte par le renfort 10 finit par être trop faible et l'élément d'habillage par s'effacer. Le document DE 10 2010 035 198 A1 révèle un agencement en substance selon le préambule de la revendication 1.

Afin de pallier ces inconvénients, l'invention a pour objet un agencement comprenant un élément de structure d'entrée de porte et un élément d'habillage comportant également des moyens de limitation de la déformation de l'élément qui soit efficace, peu onéreux et de fabrication aisée.

L'invention a aussi pour objet un agencement comprenant un élément de structure d'entrée de porte et un élément d'habillage comportant également des moyens de limitation de la déformation de l'élément qui facilitent le montage d'un joint de porte. A cet effet, l'invention propose un agencement du type cité ci-dessus, caractérisé en ce que l'élément de tôlerie comporte un contre-appui formant un dispositif de limitation de la déformation de l'élément d'habillage lorsque ce dernier subit une force exercée selon une direction sensiblement longitudinale.

Selon d'autres caractéristiques de l'invention:
- Le contre-appui est constitué par une deuxième cloison s'étendant perpendiculairement depuis un bord de la première cloison du renfort en direction de l'élément d'habillage et en contact avec la paroi de fond transversale du renfoncement de l'élément d'habillage.
- Le contre-appui est formé par pliage d'un bord du renfort.
- Le contre-appui est constitué par une protubérance formée dans un bord du renfort.
- Le contre-appui est dimensionné pour résister à une force équivalente à celle nécessaire au montage d'un joint sur le renfort et l'élément de structure.

D'autres caractéristiques et avantages de l'invention apparaîtront à la lecture de la description d'exemples de réalisation d'un agencement en référence aux dessins annexés dans lesquels :
- La figure 1 est une vue en coupe horizontale d'un premier agencement selon l'état de la technique.
- La figure 2 est une vue en coupe horizontale d'un deuxième agencement selon l'état de la technique.
- La figure 3 est une vue en perspective d'un agencement selon l'invention.
- La figure 4 est une vue en coupe horizontale de l'agencement de la figure 3.

Dans la description qui suit, nous prendrons à titre non limitatif une orientation longitudinale, verticale et transversale indiquée par le trièdre L,V,T des figures 1 à 4.

Des éléments identiques ou analogues sont désignés par les mêmes chiffres de référence.

A l'exception des éléments spécifiques du poste de conduite, le véhicule présente une symétrie générale par rapport à un plan longitudinal médian.

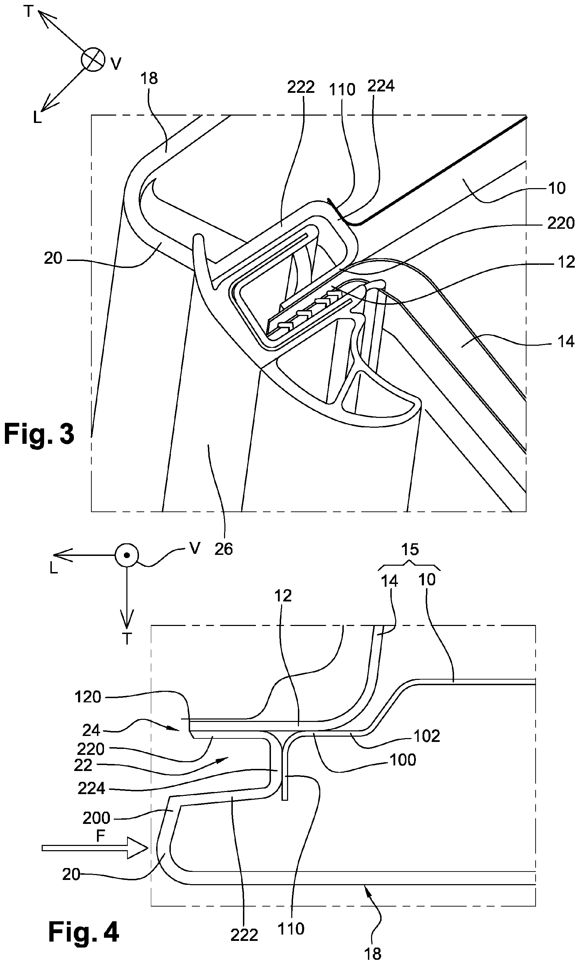

Tel que représenté aux figures 3 et 4, une entrée de porte (non représentée dans sa totalité) comporte un élément de structure périphérique 15 formé par un renfort interne 10 et un élément de tôlerie externe 14. Une première paroi 102 du renfort interne 10 et une paroi 12 de l'élément de tôlerie externe 14 s'étendent sensiblement selon un plan longitudinal. La paroi 102 du renfort 10 est en contact avec seulement une partie de la paroi 12 de l'élément de tôlerie 14, l'extrémité 120 de la paroi 12 étant située à distance d'une extrémité 100 de la paroi 102 du renfort 10. L'extrémité 100 de la paroi 102 du renfort 10 est munie d'une seconde paroi 110 formant un retour s'étendant sensiblement perpendiculairement au plan du renfort 10 dans une direction opposée à la paroi 12. Un élément d'habillage 18 s'étendant selon un plan sensiblement parallèle à celui du renfort 10 permet de dissimuler l'élément de structure 15 à la vue des passagers. L'élément d'habillage 18 comporte à son extrémité libre un rebord 20 s'étendant selon un plan transversal en direction de l'élément de structure 15. Un bord 200 du rebord 20 est muni d'une partie terminale 22 en renfoncement présentant un profil en forme de U. Le profil en U est constitué par deux cloisons externes et internes 220 et 222 sensiblement parallèles à la paroi 12 et reliées entre elles par une cloison de fond 224 perpendiculaires à la paroi 12. La cloison externe 220 est en contact avec l'extrémité 120 de la paroi 12 de l'élément de tôlerie formant ainsi une feuillure 24 orientée selon un plan longitudinal. La cloison externe 220 du U et l'extrémité 100 du renfort 10 sont alors dans le prolongement l'une de l'autre et le retour 110 du renfort 10 est en contact avec la cloison de fond 224 de la partie en forme de U 22.

Ainsi, lorsqu'un appui selon la direction donnée par la flèche F est effectué par un utilisateur sur le rebord 20, son déplacement est limité par la présence du retour 110 du renfort 10 qui forme une contre réaction à l'encontre du déplacement de la cloison de fond 224 de la partie en U 22.

Le retour 110 peut être formé sur le renfort 10 par pliage d'un bord ce qui offre l'avantage d'un procédé simple et peu onéreux, ne nécessitant pas de modifications majeures de l'outillage et de l'environnement.

Dans un mode de réalisation non représenté, le contre-appui 110 peut également être constitué par une protubérance de type bosse réalisée dans l'élément de tôlerie par un procédé d'emboutissage.

Dans un mode de réalisation non représenté, le contre-appui est constitué par un chant de tôle venant en appui contre une partie centrale de la paroi 224 du retour 24.

Ce contre-appui rigide 110 présente l'avantage de pouvoir résister à un effort important sans risque d'abîmer l'élément d'habillage 18, le contre appui 110 ne comportant pas de zone contondante susceptible de détériorer la cloison 224.

De plus la rigidité du contre-appui 110 permet d'améliorer le procédé de montage d'un joint de porte 26 sur l'entrée de porte.

Ainsi, lorsqu'un opérateur sur la chaine de montage procède à la fixation du joint 26 sur l'entrée de l'ouverture de porte en le chaussant sur la feuillure 24, cette étape est facilitée par la présence du contre-appui 110 qui évite le glissement de la cloison 220 sous l'effet de la poussée exercée par l'opérateur.

L'agencement comportant le contre-appui selon l'invention permet ainsi, sans augmentation de coûts ni contraintes supplémentaires, d'améliorer à la fois la qualité perçue à l'intérieur du véhicule et le procédé de montage.

## Revendications

1. Agencement dans un véhicule automobile comprenant un élément d'habillage (18) monté sur un élément de structure (15) d'entrée de porte, composé d'un renfort interne (10) et d'un élément de tôlerie externe (14) présentant une paroi (12) d'orientation longitudinale, l'élément d'habillage (18) s'étendant selon un plan longitudinal parallèle à celui de la paroi (12) de l'élément de tôlerie externe (14) et un rebord (20) s'étendant selon un plan transversal en direction de l'élément de structure (15) depuis un bord d'extrémité de l'élément d'habillage (18), un bord (200) du rebord (20) étant muni d'une partie terminale (22) formant un renfoncement présentant un profil en forme de U, constitué par deux cloisons interne (222) et externe (220) parallèles au plan de l'élément d'habillage (18) reliées entre elles par une cloison de fond transversale (224), la cloison externe (220) étant en appui contre une extrémité (120) de la paroi (12), de façon qu'elles forment ensemble une feuillure (24), le renfort (10) présentant une première paroi (102) s'étendant selon un plan longitudinal en appui contre une partie de la paroi (12), **caractérisé en ce que** le renfort (10) comporte un contre-appui (110) formant un dispositif de limitation de la déformation de l'élément d'habillage (18) lorsque ce dernier subit une force exercée selon une direction sensiblement longitudinale.

2. Agencement selon la revendication précédente, **caractérisé en ce que** le contre-appui (110) est constitué par une deuxième cloison (110) s'étendant perpendiculairement depuis un bord (100) de la première cloison (102) du renfort (10) en direction de l'élément d'habillage (18) et en contact avec la paroi de fond transversale (224) du renfoncement (22) de l'élément d'habillage (18).

3. Agencement selon la revendication précédente, **caractérisé en ce que** le contre-appui (110) est formé par pliage d'un bord du renfort (10).

4. Agencement selon la revendication 1, **caractérisé en ce que** le contre-appui (110) est constitué par une protubérance formée dans un bord du renfort (10).

5. Agencement selon l'une des revendications précédentes, **caractérisé en ce que** le contre-appui (110) est dimensionné pour résister à une force équivalente à celle nécessaire au montage d'un joint sur le renfort et l'élément de structure.

## Patentansprüche

1. Anordnung in einem Kraftfahrzeug, umfassend ein Verkleidungselement (18), das auf einem Strukturelement (15) eines Türeingangs angebracht ist, welches durch eine innere Verstärkung (10) und ein äußeres Blechelement (14), das eine Wand (12) mit Längsausrichtung aufweist, gebildet ist, wobei sich das Verkleidungselement (18) entlang einer Längsebene parallel zu der der Wand (12) des äußeren Blechelements (14) erstreckt, und eine Randleiste (20), die sich von einem Abschlussrand des Verkleidungselements (18) entlang einer Querebene in Richtung des Strukturelements (15) erstreckt, wobei ein Rand (200) der Randleiste (20) mit einem Endteil (22) versehen ist, der eine ein U-förmiges Profil aufweisende Ausnehmung bildet, die durch zwei Trennwände, eine innere (222) und eine äußere (220), parallel zu der Ebene des Verkleidungselements (18) gebildet wird, welche durch eine Querendtrennwand (224) miteinander verbunden sind, wobei die äußere Trennwand (220) an einem Ende (120) der Wand (12) anliegt, derart, dass sie zusammen einen Falz (24) bilden, wobei die Verstärkung (10) eine erste Wand (102), die sich entlang einer Längsebene in Anlage an einen Teil der Wand (12) erstreckt, aufweist, **dadurch gekennzeichnet, dass** die Verstärkung (10) ein Widerlager (110) aufweist, das eine Vorrichtung zur Begrenzung der Verformung des Verkleidungselements (18), wenn dieses mit einer entlang einer im Wesentlichen longitudinalen Richtung ausgeübten Kraft beaufschlagt wird, bildet.

2. Anordnung nach dem vorhergehenden Anspruch, **dadurch gekennzeichnet, dass** das Widerlager (110) durch eine zweite Trennwand (110) gebildet wird, die sich von einem Rand (100) der ersten Trennwand (102) der Verstärkung (10) senkrecht in Richtung des Verkleidungselements (18) und in Kontakt mit der Querendtrennwand (224) der Ausnehmung (22) des Verkleidungselements (18) erstreckt.

3. Anordnung nach dem vorhergehenden Anspruch, **dadurch gekennzeichnet, dass** das Widerlager (110) durch Biegen eines Rands der Verstärkung (10) gebildet ist.

4. Anordnung nach Anspruch 1, **dadurch gekennzeichnet, dass** das Widerlager (110) durch einen in einem Rand der Verstärkung (10) ausgebildeten Vorsprung gebildet ist.

5. Anordnung nach einem der vorhergehenden Ansprüche, **dadurch gekennzeichnet, dass** das Widerlager (110) dazu dimensioniert ist, einer Kraft zu widerstehen, die der zum Anbringen einer Dichtung auf die Verstärkung und dem Strukturelement erforderlichen entspricht.

## Claims

1. Arrangement in a motor vehicle, comprising a covering element (18) mounted on a structural element (15) of a door entrance, made up of an inner reinforcement (10) and an outer sheet metal element (14) having a wall (12) with longitudinal orientation, the covering element (18) extending in a longitudinal plane parallel to that of the wall (12) of the outer sheet metal element (14) and a rim (20) extending in a transverse plane towards the structural element (15) from an end edge of the covering element (18), one edge (200) of the rim (20) being provided with a terminal portion (22) forming a recess having a U-shaped profile, made of two inner (222) and outer (220) partitions parallel to the plane of the covering element (18), connected to one another by a transverse end partition (224), the outer partition (220) resting against one end (120) of the wall (12), so that together they form a rebate (24), the reinforcement (10) having a first wall (102) extending in a longitudinal plane resting against a portion of the wall (12), **characterized in that** the reinforcement (10) includes a counter-brace (110) forming a device for limiting the deformation of the covering element (18) when the latter is exposed to a force exerted in a substantially longitudinal direction.

2. Arrangement according to the preceding claim, **characterized in that** the counter-brace (110) is constituted by a second partition (110) extending perpendicularly from an edge (100) of the first partition (102) of the reinforcement (10) towards the covering element (18), and in contact with the transverse end wall (224) of the recess (22) of the covering element (18).

3. Arrangement according to the preceding claim, **characterized in that** the
counter-brace (110) is formed by bending an edge of the reinforcement (10).

4. Arrangement according to Claim 1, **characterized in that** the counter-brace (110) is constituted by a protuberance formed in an edge of the reinforcement (10).

5. Arrangement according to one of the preceding claims, **characterized in that** the counter-brace (110) has dimensions such as to withstand a force equivalent to that necessary for mounting of a seal on the reinforcement and the structural element.
